Europäisches Patentamt

European Patent Office    (11) Publication number: **0 066 641**
**A1**
Office européen des brevets

(12)    **EUROPEAN PATENT APPLICATION**

(21) Application number: **81104414.8**    (51) Int. Cl.³: **B 60 B 33/02**

(22) Date of filing: **09.06.81**

(43) Date of publication of application: **15.12.82**    (71) Applicant: **Heinrich Blickle GmbH & Co.KG,**
**Bulletin 82/50**    **D-7463 Rosenfeld/Württ. (DE)**

(72) Inventor: **Rauch, Hubert, Friedrichstrasse,**
**D-7243 Vöhringen/Württ. (DE)**

(74) Representative: **Säger, Manfred, Dipl.-Ing. et al,**
**Patentanwälte Dipl.-Ing. Otto Flügel Dipl.-Ing. Manfred**
(84) Designated Contracting States: **AT BE CH DE FR GB IT**    **Säger Cosimastrasse 81, D-8000 München 81 (DE)**
**LI LU NL SE**

(54)    A runner having both the function of a castor wheel and a support wheel.

(57)    A runner (9) having both the function of a castor wheel
and a support wheel, comprising a fork member (8) which
is pivotable relative to a bearing member (5) to be attached
to an article which is required to move, whereby the fork
member (8) can be arrested by means of a pin (14) in at least
one click-stop position in a groove (15) formed in the bearing
member (15), and whereby the pin (14) can be arrested by
means of an actuating member (12) which is arranged at the
fork member (8) in the front or lateral portion of which,
viewed in the moving direction of runner (9).

—1—

## SPECIFICATION

Improvements in or relating to a runner.

This invention relates to a runner and is particularly concerned with a runner having both the function of a castor wheel and a support wheel.

A runner of this kind is known (DE-OS 18 16 213). In the known runner the pivot axis of which is not located under the pivot bearing for which reason the fork member always aligns such as in moving direction to be positioned behind the pivot bearing. In the rear portion of the runner, as viewed in moving direction, there is also arranged an actuating member upon which operation the runner or castor wheel, respectively, which is rotatable around a vertical axis, will charge the function of a support wheel  which is locked in this degree of freedom.

If this known kind of runner is used for pushing or moving a garbage container or a similar article which requires to move, it is preferable to lock the two front runners, as viewed in moving direction, thus obtaining support wheels enabling the container to be moved and traced easily and correctly even on bumpy or broken ground. When applying such known runners to garbage containers the actuating member, which is operated in the rear portion of the runner, disappears underneath the container and is therefore not accessible to operation. To operate the actuating member the garbage container has to be moved first by a certain distance in a direction opposite to the moving direction actually desired until the rear runners have aligned such that the actuating member is accessible to operation. Thereafter, the container can be moved in the desired direction with the runners properly aligning and finally

0066641

- 2 -

automatically locking. By reason of this bothersome
operation this known kind of runner could not work successfully with garbage containers or similar articles.

Thus the present invention is based on the problem of further
developing the known runner in such a way that the operation
for changing the function of a castor wheel into the
function of a support wheel, required for use with garbage
containers or similar articles, may be effected as easily
and quickly as possible without bothersome manoeuvering
actions and changes in direction.

Due to the fact that the actuating member is fixed to the
fork member such as to be freely rotatable therewith, same
alway aligns so as to comply with the track alignment of
the runner per se.

If according to one aspect of the present invention, the
actuating member is arranged in the front portion of the
runner, as viewed in moving direction, the runners according
to the present invention may be fixed on the front side of
a garbage container or similar article which requires to
move, so as to be easily foot-operated from the upper side
for locking the castor wheel in order to obatain the function
of a support wheel, since the actuating member, which projects forwardly of the container, is freely accessible to
operation. In addition, if the runner is arranged in the
corner portion of the container, the actuating member may be
arranged laterally with reference to the moving direction,
i.e. in a portion being approximately at right angles to
the moving direction, so that the actuating member is operable from the lateral side of the container with the runners
aligned in moving direction.

According to another aspect of the present invention the
runner is provided with two click-stop positions or
registers arranged vertically to each other thus
offering two independent, vertical moving directions in
case that the runners are used with garbage containers
or similar articles. Further, the operation of the actuating
member of each runner for locking same in order to obtain
support wheels may be effected easily from the front or
lateral side of the container, as viewed in moving direction.

A runner according to the present invention is adapted
such as to charge both the function of a castor wheel and
a support wheel, and can be operated easily and quickly
without requiring bothersome manoeuvering actions and
changes in direction.

An embodiment of the invention will now be described with
reference to the accompanying drawings, wherein:

Figure 1   is a cross sectional view in diagrammatic representation of a runner charging the function
           of a castor wheel,

Figure 2   is a top view of the runner shown in fig.1,

Figure 3   is a cross sectional view in diagrammatic representation of a runner charging the function
           of a support wheel, and

Figure 4   is a top view of the runner shown in fig.3.

0066641

- 4 -

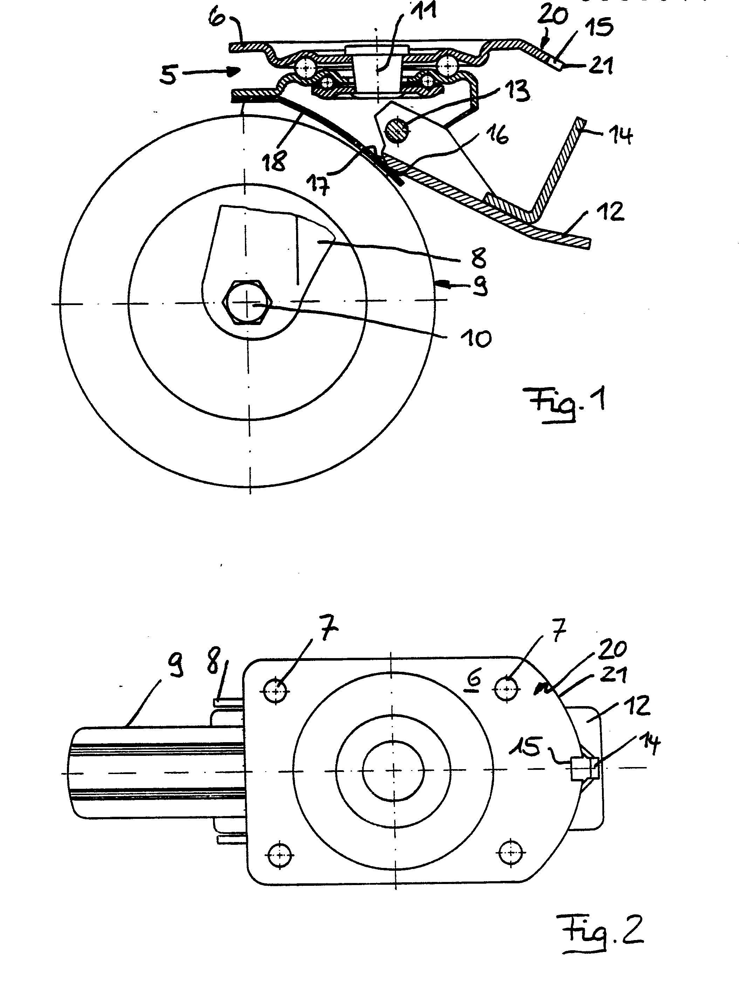

With reference to fig.1, a runner is provided with a pivot bearing 5 comprising a bearing member 6 having bores 7 (fig.2) for securing the runner to an article which is required to move. A fork member 8 is fixed to the bearing 5, and the runner 9 is supported in the fork member 8 by means of a pivot axis 10. The pivot axis 10 is arranged laterally of the vertical axis 11 of the pivot bearing 5 in order to effect track alignment of the runner 9.

An actuating member, which is provided in form of a lever 12, is fixed to the pivot bearing 5 so as to be pivotable about an axis 13. On the upper side of the lever 12 on the free end of which there is provided a pin formed as a tongue 14 which engages in a corresponding cavity , groove or similar opening 15 formed in the bearing member 15.

On the other end of the lever 12, which is pivotally connected to the axis 13, there are provided spring surfaces 16 and 17 by means of which the lever 12 is maintained either in operating or non-operating position (figs. 1 and 2 respectively). A leaf spring 18 rests with its free end against the spring surfaces 16 and 17 of the lever 12, the other end of the leaf spring 18 being fixed to the pivot bearing 5.

Within the range of the groove 15 the bearing member 5 shows an inclined portion 20 having a wedge surface 21 arranged to both sides of the groove 15, so that the bearing member 6 may be easily attached with its plane surface, for example, to the bottom side of a container or similar article and, on the other hand, that the lever 12 can be operated with the runner being locked not in any position, but merely in a position which is determined by the groove 15 when the tongue 14 is moved along the wedge surface 21 and finally engaged in the groove 15.

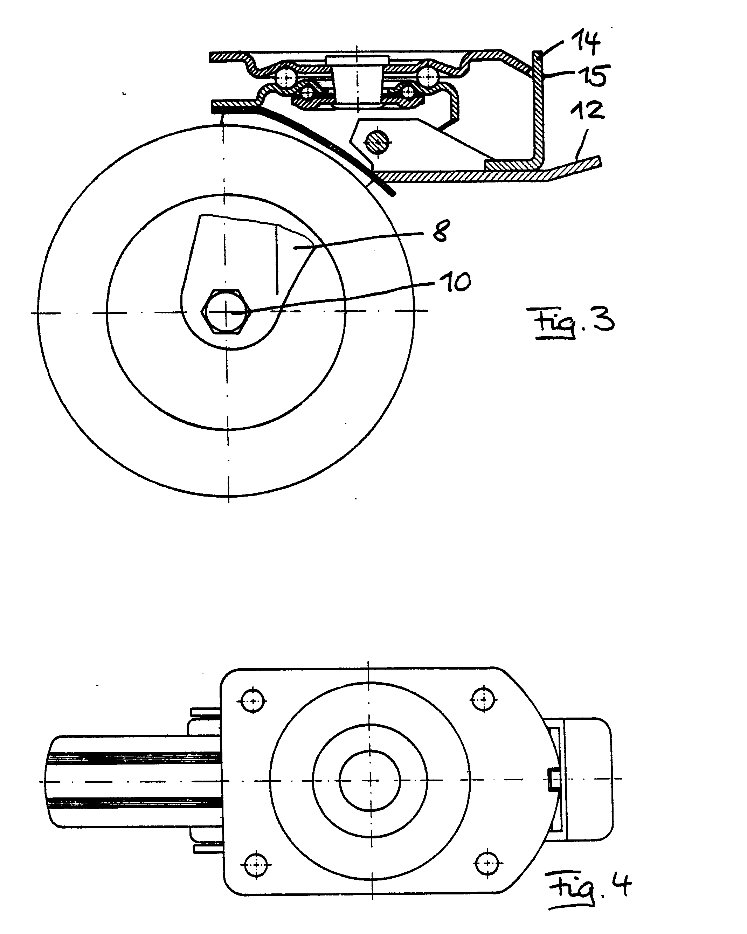

In figure 3 and 4 there is shown the runner of fig.1 in locked condition, i.e. as a support wheel. The only difference between fig.1 and fig.3 is that the lever 12 is shown in operation, i.e. in swung up condition, with the tongue 14 and the groove 15 being engaged. As the features mentioned in connection with figs. 1 and 2 do also apply to figs. 3 and 4 a detailed description is not repeated anymore.

Dipl.-Ing. Otto Flügel, Dipl.-Ing. Manfred Säger, Patentanwälte, Cosimastr. 81, D-8 München 81

Heinrich Blickle GmbH & Co.KG
7463 Rosenfeld/Württ.
Federal Republic of Germany

0066641

11.671A /EU

·ٹٹ·.

## CLAIMS

1. A runner having both the function of a castor wheel and a support wheel, comprising a fork member which by means of a pivot bearing is pivotable relative to a bearing member to be attached to an article which requires to move, and which fork member can be arrested in at least one click-stop position by means of spring-loaded engagement of a pin, which is movable together with the fork member, in a cavity, groove or similar opening formed in the bearing member, whereby the pin can be arrested by means of an actuating member and engaged via wedge surfaces in the cavity, groove or a similar opening, c h a r a c t e r i z e d   i n that the actuating member (12) is arranged at the fork member (8) in the front or lateral portion of which, as viewed in moving direction of the runner (9).

2. A runner according to claim 1, c h a r a c t e r i z e d i n  that the actuating member (12) can be arrested in two click-stop positions.

3. A runner according to claim 2, c h a r a c t e r i z e d i n  that the click-stop positions are arranged to each other perpendicularly.

4. A runner according to one of the claims 1 to 3, c h a r a c t e r i z e d   i n  that the actuating member is provided in form of a lever (12) fixed on a pivot bearing (5).

5. A runner according to one of the claims 1 to 4, c h a r a c t e r i z e d   i n  that the spring is provided in form of a leaf spring (18) which rests against the pivotally connected end of the lever (12).

6. A runner according to claim 5, c h a r a c t e r i z e d i n  that the lever (12) has provided two spring surfaces (16,17) angularly arranged to each other and determining the two positions (fig.1 and fig.3) of the lever (12).

7. A runner according to one of the claims 1 to 6, c h a r a c t e r i z e d   i n  that on the free end portion of the lever (12) on the upper side of which there is arranged a pin (14).

8. A runner according to claim 7, c h a r a c t e r i z e d i n   that the pin is provided in form of a tongue (14).

9. A runner according to claim 8, c h a r a c t e r i z e d i n   that the tongue (14) projects of the lever (12) such as to form a right angle.

10. A runner according to one of the claims 1 to 9, c h a r a c t e r i z e d   i n  that the bearing member (6) shows a portion (20) which is inclined towards the lever (12) and provided with the groove (15).

11. A runner according to claim 10, c h a r a c t e r - i z e d   i n   that the inclined portion (20) shows a wedge surface (21) for the pin (14).

12. A runner according to claim 11, c h a r a c t e r - i z e d   i n   that the wedge surface (21) is provided such as to form approximately a divided circle.

0066641

Fig.1

Fig.2

Fig. 3

Fig. 4

00 6 6 6 4 1
Application number

EUROPEAN SEARCH REPORT

EP 8: :0 --

European Patent
Office

| Category | Citation of document with indication, where appropriate, of relevant passages | Relevant to claim |
|---|---|---|
| X | DE - A - 1 505 759 (BLICKLE)<br>* The entire text, figures 1-3 * | 1,4,5 6 |
| X | DE - A - 2 231 866 (KUGELFABRIK SCHULTE)<br>* The entire text, figures 1,2 * | 1,4,5 |
| X | FR - A - 2 427 915 (ALBERT SCHULTE)<br>* Page 4, line 23 - page 5, line 39, figure 1,2 * | 1,4 |
| X | DE - A - 2 552 501 (HULSBECK)<br>* The entire text, figures 1-5 * | 1,4,7 10 |
| X | DE - B - 1 290 441 (HAPPE)<br>* The entire text, figures 1,2 * | 1,4,5 6 |
| X | DE - A - 1 918 357 (HUFA-ROLLEN)<br>* The entire text, figures 1,3 * | 1,4,5 9 |
| A | DE - A - 1 900 554 (KUGELFABRIK SCHULTE)<br>* The entire text, figures 1-5 * | 1,4,6 |
| A | DE - A - 1 913 325 (HUFA-ROLLEN)<br>* The entire text, figures 1-6 *<br>./. | 1 |

**DOCUMENTS CONSIDERED TO BE RELEVANT**

**CLASSIFICATION OF THE APPLICATION (Int. Cl. 3)**

B 60 B 33/02

**TECHNICAL FIELDS SEARCHED (Int.Cl. 3)**

B 60 B 33/
B 62 B 5/

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 24-03-1982 | AYITER |

EPO Form 1503.1 06.78

**European Patent Office**

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| A | US - A - 2 707 794 (KRAMESAK)<br>* Column 2, lines 6-13, figures 1,4 * | 1 | |

----